# DEMANDE DE BREVET EUROPEEN

(11) **EP 1 106 235 A1**
(43) Date de publication de la demande: **13.06.2001**
(21) Numéro de dépôt: 00403175.3
(22) Date de dépôt: 14.11.2000
(51) Int. Cl.: B01D 53/22

(54) **Installation et procédé de séparation de gaz par perméation sélective**

(30) Priorité: 09.12.1999 FR 9915556
(71) Demandeur: L'air Liquide Société Anonyme pour l'étude et l'exploitation des procédés Georges Claude, 75321 Paris Cédex 07 (FR)
(72) Inventeur: Dolle, Pierre Olivier, 75013 Paris (FR); Monereau, Christian, 75011 Paris (FR)
(74) Mandataire: Le Moenner, Gabriel

(57) **Abrégé**

Cette installation comporte des sous-groupes de perméateurs (SG1 à SG3), chaque sous-groupe comportant un perméateur (4A à 4C) ou plusieurs perméateurs montés en parallèle, et présentant une entrée (12A à 12C), une sortie de perméat (14A à 14C) et une sortie de non-perméat (16A à 16C). La sortie de non-perméat d'un premier sous-groupe (SG1, SG2) est reliée à l'entrée d'un deuxième sous-groupe (SG2, SG3), et au moins un des sous-groupes comporte des moyens d'obturation (22A à 22C) de sa sortie de perméat lorsque le débit de charge réel est inférieur d'une quantité prédéterminée au débit de charge nominal.

## Description

La présente invention concerne une installation de traitement d'un mélange gazeux de charge par perméation sélective, du type destinée à être alimentée avec un débit de charge nominal du mélange gazeux, et comportant au moins deux sous-groupes de perméateurs, chaque sous-groupe comportant un perméateur ou plusieurs perméateurs montés en parallèle, et présentant au moins une entrée, une sortie de perméat et une sortie de non-perméat.

Elle concerne en outre un procédé de traitement d'un mélange gazeux utilisant une telle installation.

Les installations de séparation d'un mélange gazeux par perméation sélective comprennent des perméateurs qui comportent un récipient dans lequel est agencée une membrane à perméabilité sélective séparant une chambre de non-perméat et une chambre de perméat.

Le récipient comporte une ouverture d'alimentation, une ouverture de sortie de non-perméat et une ouverture de sortie de perméat. De façon complémentaire, certains perméateurs comportent une quatrième ouverture qui permet l'introduction d'un gaz dit de balayage dans le circuit du perméat. La présence de cette ouverture n'est toutefois pas pertinente vis-à-vis de la présente invention.

Afin de séparer un mélange gazeux, on charge le perméateur avec un courant du mélange par l'ouverture d'alimentation. Il se produit alors une différence de pression entre les deux côtés de la membrane.

Etant donné que la membrane a une perméabilité plus importante vis-à-vis d'un constituant du mélange que vis-à-vis d'un autre constituant du mélange, le perméat s'enrichit en constituant le plus perméable tandis que l'autre constituant reste essentiellement sur le côté non-perméat.

Les deux courants gazeux sont alors soutirés aux ouvertures de sortie respectives.

La perméabilité de la membrane vis-à-vis d'un constituant donné du mélange gazeux dépend de différents paramètres, entre autres : la température du flux gazeux de charge, la pression de ce flux gazeux, la pression du gaz du côté perméat et la différence entre ces deux pressions.

C'est pourquoi les installations sont conçues pour un débit prédéterminé de gaz de charge, à une certaine pression et à une certaine température, et pour une certaine pression du côté perméat. A ce « point d'exploitation », l'installation sépare une certaine proportion du constituant à séparer du mélange, appelée productivité ou récupération, à une certaine pureté.

Très souvent, pour des raisons de production, les installations de séparation ne sont pas utilisées à leur point d'exploitation prédéterminé, la demande de gaz de production (soit le perméat, soit le non-perméat) étant inférieure au débit de gaz nominal.

Dans de tels cas, si on diminue simplement le débit de charge correspondant à la diminution de la demande, on constate que la productivité augmente tandis que la pureté du produit récupéré diminue.

Afin de donner une certaine souplesse aux installations concernant le débit de charge, tout en gardant la productivité et la pureté constantes, de nombreuses propositions ont été faites.

Premièrement, on peut modifier les conditions opératoires de la membrane. Ceci peut être fait par action sur les pressions de fonctionnement côté charge et/ou perméat, par exemple par réduction de la différence de pression entre les deux côtés de la membrane ou par réduction de la pression du côté charge, ou bien par changement de la température du gaz (voir par exemple US-A-4 806 132, US-A-4 857 082, US-A-5 840 098).

La modification des conditions d'exploitation des perméateurs est cependant très limitée si l'on veut conserver des performances acceptables.

Deuxièmement, on peut diminuer la surface de perméation utilisée.

A ce sujet, on a proposé d'installer n(n > 2) perméateurs en parallèle qui sont chacun alimentés avec une partie du débit de charge. Lorsque la demande de gaz diminue, on modifie le nombre de perméateurs en fonctionnement en bloquant la sortie de perméat d'un nombre de perméateurs correspondant, comme décrit par exemple dans le document US-A-4 397 661. Chaque perméateur est alors traversé par son débit nominal, mais la perméation a lieu seulement dans une partie des perméateurs.

Dans cette installation, le débit de charge reste inchangé pendant le fonctionnement à demande de production diminuée. La productivité est par suite réduite.

L'invention a pour but de fournir une installation de séparation d'un mélange de gaz par perméation sélective qui permette un fonctionnement au-dessous du débit de charge nominal tout en conservant une productivité et une pureté similaires à celles du point de fonctionnement nominal, et qui permette un retour rapide aux conditions nominales.

A cet effet, l'invention a pour objet une installation de traitement d'un mélange gazeux de charge par perméation sélective du type cité ci-dessus, dans lequel la sortie de non-perméat d'un premier sous-groupe est reliée à l'entrée d'un deuxième sous-groupe, et au moins un des premier et deuxième sous-groupes comporte des moyens d'obturation sélective au moins substantielle de sa sortie de perméat.

Suivant des modes particuliers de réalisation, l'invention peut comporter une ou plusieurs des caractéristiques suivantes :
- les liaisons de la sortie de non-perméat d'un sous-groupe à l'entrée d'un sous-groupe suivant sont dépourvues de tout moyen d'obturation ;
- chacun des sous-groupes présente une même surface de perméation ;
- chacun des sous-groupes à l'exception d'un sous-groupe, notamment du sous-groupe amont, comporte des moyens d'obturation au moins substantielle du côté perméat ;
- la surface de perméation est différente d'un sous-groupe à l'autre ;
- les sous-groupes sont reliés entre eux de façon telle que chaque sous-groupe présente une surface de perméation plus importante ou égale à celle du sous-groupe suivant ;
- chacun des sous-groupes comporte des moyens d'obturation au moins substantielle de sa sortie de perméat;
- les moyens d'obturation sont des vannes tout-ou-rien;
- l'installation comporte des moyens de réglage de la température du fluide de charge et/ou des moyens de réglage de la pression du fluide de charge et/ou de moyens de réglage de la pression du perméat.

L'invention a également pour objet un procédé de traitement d'un mélange gazeux de charge utilisant une installation telle que définie ci-dessus, caractérisé en ce qu'on ferme au moins substantiellement lesdits moyens d'obturation d'au moins un sous-groupe lorsque le débit de charge réel devient inférieur au débit de charge nominal d'une quantité prédéterminée.

Suivant l'invention, le procédé peut comporter une ou plusieurs des caractéristiques suivantes :
- lorsqu'on ferme des moyens d'obturation, le rapport de la surface de perméation effective à la surface de perméation totale de l'installation est sensiblement égale au rapport du débit de charge réel au débit de charge nominal ;
- lorsqu'une égalisation du rapport des surfaces de perméation au rapport des débits par ladite fermeture n'est pas possible, on actionne des moyens d'ouverture de telle façon que le rapport des surfaces de perméation soit le plus proche possible du rapport des surfaces de perméation lors de ladite égalisation, et supérieur à cette valeur ;
- lorsque le rapport de la surface de perméation effective à la surface de perméation totale n'est pas égal au rapport du débit de charge réel au débit de charge nominal, on règle la température du fluide de charge et/ou la pression du fluide de charge et/ou la pression du perméat de façon telle que le perméat présente un débit et une pureté prédéterminés ;
- la totalité du courant de non-perméat d'un sous-groupe est le courant d'alimentation du sous-groupe suivant.

L'invention sera mieux comprise à la lecture de la description qui va suivre, donnée uniquement à titre d'exemple et faite en se référant aux dessins annexés, sur lesquels :
- la Figure 1 montre schématiquement une installation de séparation de gaz selon un premier mode de réalisation de l'invention ;
- la Figure 2 montre un deuxième mode de réalisation d'une installation de séparation de gaz selon l'invention.

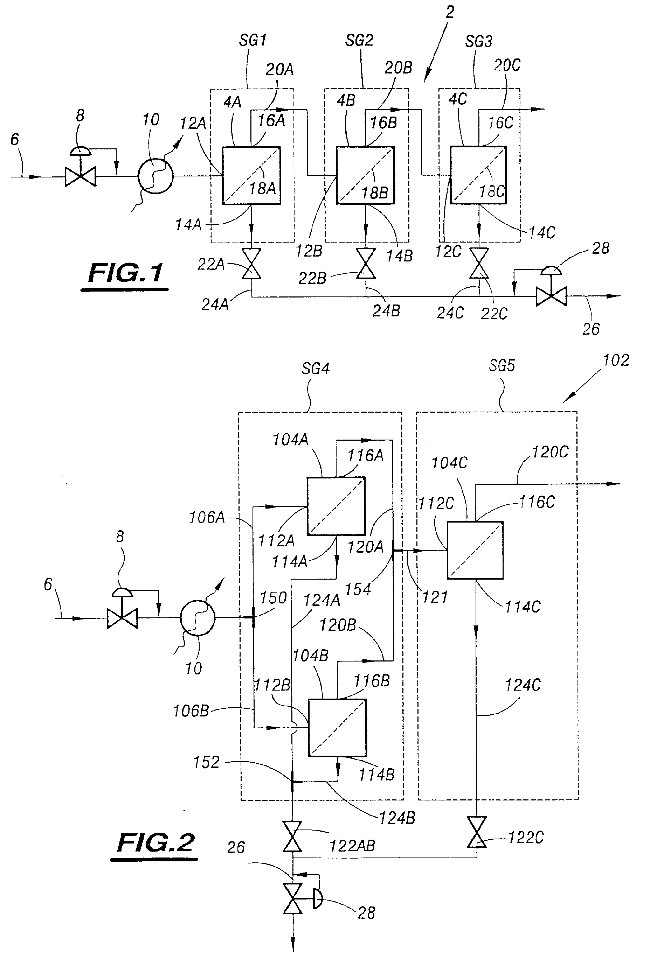

La Figure 1 montre un mode de réalisation d'une installation 2 de traitement d'un mélange gazeux de charge par perméation sélective. Elle comporte trois sous-groupes SG1, SG2, SG3 dont chacun comprend un perméateur identique 4A, 4B, 4C.

Une conduite d'alimentation 6 est reliée par l'intermédiaire d'une vanne de réglage 8 et d'un échangeur de chaleur 10 à l'entrée du premier 4A des trois perméateurs 4A, 4B, 4C.

Chaque perméateur 4A, 4B, 4C présente une entrée 12A, 12B, 12C, une sortie de perméat 14A, 14B, 14C et une sortie de non-perméat 16A, 16B, 16C. Chaque perméateur 4A, 4B, 4C comprend une membrane 18A, 18B, 18C de perméation qui a une certaine surface qui présente une perméabilité sélective envers différents constituants du mélange de charge et qui sépare une chambre à haute pression (non-perméat) d'une chambre à basse pression (perméat). Les trois perméateurs 4A, 4B, 4C sont connectés en série du côté non-perméat, c'est-à-dire que la sortie de non-perméat 16A, 16B d'un perméateur autre que le dernier perméateur 4C est reliée à l'entrée 12B, 12C du perméateur suivant par des conduites 20A, 20B. Il est à noter que la conduite 20A, 20B menant de la sortie 16A, 16B d'un perméateur à l'entrée 12B, 12C d'un perméateur suivant ne comporte aucun moyen d'obturation.

Une vanne d'obturation 22A, 22B, 22C est insérée dans la conduite de sortie de non-perméat 24A, 24B, 24C de chaque perméateur. Les vannes d'obturation 22A, 22B, 22C agissent en tant que moyens d'obturation du côté perméat. Elles sont, par exemple, des vannes tout-ou-rien.

Les conduites de sortie 24A, 24B, 24C sont reliées à une conduite collectrice de production 26, menant, dans ce mode de réalisation, à un circuit utilisateur.

Une vanne de réglage 28 est insérée dans cette conduite de production 26. Elle sert à régler la pression du côté perméat.

Il est à noter que les perméateurs 4A, 4B, 4C et les membranes 18A, 18B, 18C sont choisis en fonction du mélange gazeux à séparer. Tout perméateur/membrane permettant de séparer le mélange gazeux à traiter peut être utilisé. La membrane comporte par exemple des fibres creuses ou des feuilles roulées en spirale.

L'installation fonctionne de la façon suivantes.

Pendant le fonctionnement normal, un débit nominal d'un courant de charge d'un mélange gazeux est introduit dans le premier perméateur 4A par la conduite d'alimentation 6. Le courant comporte un constituant à haute perméabilité et un constituant à basse perméabilité. Ce courant est réglé à une certaine pression par la vanne de réglage 8, et il lui est conféré une température prédéterminée par l'échangeur de chaleur 10. Pour ce mode de fonctionnement (nominal), les trois vannes d'obturation 22A, 22B, 22C sont ouvertes.

Le courant entre dans le premier perméateur 4A, à savoir dans la chambre à haute pression de celui-ci. Du fait de la différence de pressions régnant sur les deux côtés de la membrane 18A, le mélange de gaz est alors forcé à traverser la membrane 18A. Grâce à la perméabilité sélective de la membrane 18A, le constituant à haute perméabilité traverse la membrane beaucoup plus rapidement que l'autre constituant. C'est pourquoi sur le côté basse pression, le perméat est enrichi en constituant à haute perméabilité. Ce courant gazeux sort du perméateur 4A par la sortie de perméat 14A.

Pendant le temps de séjour du mélange dans la chambre à haute pression du perméateur 4A, seulement une partie du constituant à haute perméabilité traverse la membrane 18A.

L'essentiel du constituant du mélange gazeux à basse perméabilité ainsi que la partie du constituant à haute perméabilité qui n'a pas traversé la membrane 18A sort du premier perméateur 4A par la sortie de non-perméat 16A. Ce courant gazeux entre dans le deuxième perméateur 4B par l'entrée 12B de celui-ci. Là aussi, une certaine quantité du constituant à haute perméabilité traverse la membrane 18B vers la chambre à basse pression, et le perméat est soutiré à la sortie de perméat 14B, comme c'était le cas pour le premier perméateur 4A. De nouveau, le mélange gazeux résiduaire sort du perméateur 4B par la sortie de non-perméat 16B et est envoyé vers l'entrée 12C du troisième perméateur 4C. Dans le troisième perméateur 4C, sensiblement le reste du constituant à haute perméabilité est retiré du courant de charge et soutiré avec le perméat.

Le fait que les perméateurs 4A, 4B, 4C sont reliés en série du côté charge n'a que peu d'effet sur les pressions de fonctionnement des perméateurs, car le courant de charge a généralement une pression élevée.

Le gaz perméat est envoyé des sorties 14A, 14B, 14C des trois perméateurs 4A, 4B, 4C, à travers les vannes d'obturation 22A, 22B, 22C, vers la conduite collectrice 26, d'où il passe vers l'utilisateur. La vanne de réglage 28 située dans la conduite collectrice permet de régler la pression dans les chambres à basse pression des perméateurs 4A, 4B, 4C, et, en conséquence le gradient de pression par rapport aux chambres à haute pression.

Le constituant gazeux à basse perméabilité ainsi que le résiduaire du constituant à haute perméabilité est évacué à la sortie 16C du troisième perméateur 4C, par la conduite 20C.

Il est à noter que le produit souhaité à obtenir par l'utilisateur peut aussi bien être le non-perméat, par exemple lors de production d'azote à partir d'air, que le perméat, par exemple lors de l'épuration d'hydrogène.

Lorsque la demande de gaz de l'utilisateur tombe, par exemple, à 2/3 de la capacité de production nominale de l'installation 2, on ferme la vanne d'obturation 22A, 22B, 22C d'un des perméateurs 4A, 4B, 4C et on diminue le débit de charge du mélange gazeux à 2/3 du débit nominal.

Dans ce cas, les pressions réglées par les deux vannes de réglage 8, 28, ainsi que la température réglée par l'échangeur de chaleur 10 restent les mêmes que pendant le fonctionnement à débit nominal de l'installation 2.

Par exemple, on ferme la vanne d'obturation 22C du troisième perméateur 4C. En conséquence de cette obturation, la pression de la chambre à basse pression (côté perméat) du troisième perméateur 4C s'ajuste à la pression de la chambre à haute pression de celui-ci. La perméation dans le troisième perméateur 4C s'arrête ainsi. La surface de membrane effective, c'est-à-dire, la somme des surfaces de perméation des sous-groupes dont les vannes d'obturation sont ouvertes, est alors 2/3 de la surface de membrane effective pendant le fonctionnement nominal c'est-à-dire la surface de perméation totale. Le rapport du débit de charge de mélange gazeux à la surface de perméation effective reste alors constant, et les conditions dans le premier 4A et le deuxième 4B perméateurs restent les mêmes qu'auparavant.

C'est pourquoi à la sortie perméat 16A, 16B de ces deux perméateurs 4A, 4B, on récupère un courant gazeux de perméat ayant sensiblement la même pureté que le courant de perméat en fonctionnement nominal. 2/3 du débit nominal de gaz perméat peut alors être soutiré, via la conduite collectrice 26, par l'utilisateur. Le courant gazeux résiduaire qui se présente à la sortie de non-perméat 16B du deuxième perméateur 4B est envoyé vers l'entrée 12C du troisième perméateur 4C, le traverse sans qu'aucune perméation ait lieu et s'échappe à travers la sortie de non-perméat 16C du troisième perméateur 20C.

On conçoit qu'un abaissement de température du troisième perméateur 4C est ainsi empêché. La membrane du troisième perméateur n'est donc pas en danger d'endommagement par condensation des constituants du mélange gazeux. Selon le mélange gazeux à traiter, de tels condensats peuvent être, par exemple, de l'eau, des alcools, des aromatiques, NH₃, des amines ou des hydrocarbures lourds. Suivant le type de membrane, des effets négatifs variés peuvent apparaître, à savoir :
- modification des propriétés diffusionnelles (par exemple gonflement du polymère) ;
- destruction de la structure chimique ;
- dépôt d'une couche à la surface modifiant les flux gazeux.

L'installation peut être de nouveau exploitée au débit nominal immédiatement, sans qu'un réchauffement du troisième perméateur 4C soit nécessaire.

Lorsque la demande de gaz de l'utilisateur tombe à 1/3 du débit nominal, on ferme en plus la vanne d'obturation 22B du deuxième perméateur 4B et on diminue le débit de charge de façon correspondante.

Les effets qui se produisent dans les perméateurs sont les mêmes que dans le cas des 2/3 du débit nominal mentionné ci-dessus. La séparation de gaz a lieu seulement dans le premier perméateur, dans les conditions initiales. La pureté du perméat reste donc inchangée, et les deux perméateurs inactifs restent à la température de service prêts à remis en opération.

Lorsque la demande de gaz se situe entre les points d'exploitation 1/3 et 2/3 ou entre 2/3 et 100% du débit nominal de l'installation, on règle le débit de charge à la valeur qui correspond à la demande, on commute les vannes d'obturation 22A, 22B, 22C de façon que le rapport de la surface de perméation effective à la surface de perméation totale de tous les perméateurs soit le plus proche possible du rapport du débit de charge réel au débit de charge nominal, et de préférence supérieur à cette valeur, et on modifie la pression de charge, la température du courant de charge, la pression du perméat et/ou la différence entre les pressions haute et basse, de la manière classique.

De cette façon, la pureté souhaitée du produit peut être maintenue sensiblement indépendante du débit de gaz demandé.

En variante, seulement une partie des perméateurs 4A, 4B, 4C comporte des vannes d'obturation sur leur côté sortie, notamment tous les perméateurs à l'exception d'un. Dans ce cas, il est avantageux, à cause de la (faible) perte de pression successive d'un perméateur à l'autre, d'agencer les perméateurs comportant des vannes d'obturation à l'aval des perméateurs sans vannes.

On conçoit qu'afin d'exploiter la graduation des débits nominaux, seulement N-1 vannes d'obturation sont nécessaires pour une installation de N sous-groupes. Ceci induit un faible coût de construction et de commande.

Sur la Figure 2, on voit un deuxième mode de réalisation de l'installation selon l'invention.

Les éléments identiques à ceux de la Figure 1 sont désignés par des références identiques. Les éléments ayant une fonction analogue à ceux de la Figure 1 comportent les références des éléments de cette figure augmentées de 100.

Cette installation 102 comporte deux sous-groupes de perméateurs SG4, SG5, dont le premier SG4 comprend deux perméateurs identiques 104A, 104B montés en parallèle, et le deuxième sous-groupe SG5 comprend un troisième perméateur 104C.

La conduite d'alimentation 6 est reliée par l'intermédiaire de la vanne de réglage de pression 8 et de l'échangeur de chaleur 10 à un raccord en T 150. Deux conduites 106A, 106B mènent de ce raccord en T 150, en parallèle, aux entrées 112A, 112B des deux perméateurs 104A, 104B. Les sorties de perméat 114A, 114B des deux perméateurs 104A, 104B sont reliées par des conduites de perméat 124A, 124B et par un raccord en T 152 à une vanne d'obturation 122AB.

Les sorties de non-perméat 116A, 116B des deux perméateurs 104A, 104B sont reliées, par l'intermédiaire de conduites de sortie 120A, 120B, à un raccord en T 154 auquel est reliée une conduite collectrice de non-perméat 121. Cette conduite collectrice 121 mène à l'entrée 112C du troisième perméateur 104C. La sortie de perméat 114C du troisième perméateur 104C est raccordée par l'intermédiaire d'une conduite de perméat 124C, à travers une vanne d'obturation 122C, à la conduite collectrice de perméat 26 venant de la sortie de la vanne d'obturation 122AB. La sortie de non-perméat 116C du troisième perméateur est reliée à la conduite de sortie de non-perméat 120C.

La conduite collectrice 26, menant à l'utilisateur comporte la vanne 28 de réglage de pression du perméat.

Les deux perméateurs 104A, 104B identiques connectés en parallèle, formant le sous-groupe de perméateurs SG4, pourraient être remplacés par un seul perméateur ayant une surface de perméation égale à la somme des surfaces de perméation des deux perméateurs 104A, 104B.

L'installation 102 fonctionne de la façon suivante.

En fonctionnement nominal, l'installation est alimentée à un débit de charge nominal de mélange gazeux. Les deux vannes d'obturation 122AB, 122C sont ouvertes dans ce cas. Le courant de charge traverse la vanne de réglage 8 et l'échangeur de chaleur 10. Au raccord en T 150, il est divisé en deux moitiés. Chaque moitié du courant de charge traverse un des deux perméateurs 104A, 104B du sous-groupe SG4, où une certaine quantité du gaz à haute perméabilité, est séparée du gaz à basse perméabilité, le perméat étant envoyé vers la conduite collectrice 26 par les conduites de sortie 124A, 124B.

Le gaz non-perméat de chacun des deux perméateurs 104A, 104B sort du perméateur à la sortie de non-perméat 116A, 116B, passe par les conduites de sortie 120A, 120B, est réuni dans le raccord en T 154 et entre dans le troisième perméateur 104C, où une autre partie de gaz à haute perméabilité est retirée et passe par la conduite de perméat 124C, à travers la vanne d'obturation 122C et vers la conduite collectrice 26. Le gaz résiduaire s'échappe par la conduite de non-perméat 120C du troisième perméateur.

Lorsque la demande de gaz tombe à 2/3 du débit nominal, on réduit le débit de courant de charge à 2/3 du débit nominal et, simultanément, on ferme la vanne d'obturation 122C du troisième perméateur 104C. De nouveau, le rapport de surface de membrane effective au débit gazeux de charge reste inchangé. En conséquence, la productivité et la pureté du gaz soutiré à la sortie de perméat sont quasiconstantes.

Si la demande de gaz de perméat tombe à 1/3 du débit nominal, on réduit le débit de courant de charge gazeux à 1/3 et, simultanément, on ferme la vanne d'obturation 122AB des deux perméateurs 104A, 104B et on ouvre la vanne d'obturation 122C du troisième perméateur 104C.

Le courant de charge passe alors à travers les deux perméateurs 104A, 104B, sans qu'aucune séparation n'ait lieu et entre dans le troisième perméateur 104C, où les constituants de gaz sont séparés.

Là aussi, le rapport de la surface de membrane effective au débit de charge reste inchangé.

Lorsque le débit demandé par l'utilisateur se situe entre 1/3 et 2/3 ou entre 2/3 et 100% du débit nominal de production, on commute les vannes et on agit sur les paramètres de pression et/ou température comme pour le premier mode de réalisation. Cette installation nécessite seulement une vanne d'obturation par sous-groupe. Ceci induit un faible coût de réalisation et de commande.

Les deux modes de réalisation présentés ne sont donnés qu'à titre d'exemple. Le nombre de sous-groupes à surface de perméation identique d'une installation ou les rapports des surfaces de perméation des sous-groupes de perméateurs d'une installation peuvent différer.

Il est à noter que chaque sous-groupe peut être constitué par un seul perméateur ou par plusieurs perméateurs en parallèle, ceux-ci pouvant être identiques ou différents.

Dans le cas où une installation comporte des sous-groupes SG4, SG5 ayant des surfaces de perméation différentes, il est préférable de relier les sous-groupes SG4, SG5 entre eux de façon telle que chaque sous-groupe SG4 présente une surface de perméation plus importante que celui du sous-groupe suivant SG5 ou égal à celui-ci.

En particulier, dans le cas où une installation comporte des perméateurs identiques groupés en sous-groupes SG4, SG5, il est préférable de relier les sous-groupes de telle sorte que le sous-groupe amont SG4 comporte plus de perméateurs montés en parallèle que le sous-groupe aval SG5.

Ainsi la (faible) influence de perte de charge d'un sous-groupe aux suivants est encore diminuée.

On conçoit que, dans tous les cas, tous les perméateurs sont toujours traversés par le courant de charge, et ainsi un refroidissement de ceux-ci engendrant un danger de condensation est évité.

Le redémarrage des perméateurs est immédiatement possible lorsque la demande augmente de nouveau, sans que des moyens de chauffage soient nécessaires.

En variante, au lieu de vannes tout-ou-rien qui ne peuvent être fermées que complètement, les vannes d'obturation 22A à 22C ou 122AB, 122C peuvent être des vannes réglables qu'on ne ferme que presque totalement afin de laisser passer un faible débit de gaz de perméat. Ainsi est obtenue une meilleure répartition de température dans les perméateurs non utilisés.

Il est à noter que l'invention s'applique aussi à des installations comportant des perméateurs ayant des membranes de caractéristiques différentes d'un perméateur à l'autre. Les enseignements de l'invention sont alors adaptés en conséquence.

## Revendications

1. Installation de traitement d'un mélange gazeux de charge par perméation sélective, du type destinée à être alimentée avec un débit de charge nominal du mélange gazeux, et comportant au moins deux sous-groupes de perméateurs (SG1 à SG5), chaque sous-groupe (SG1 à SG5) comportant un perméateur (4A, 4B, 4C ; 104C) ou plusieurs perméateurs (104A, 104B) montés en parallèle, et présentant au moins une entrée de mélange gazeux, une sortie de perméat reliée à un collecteur (26) et une sortie de non-perméat, au moins un des premier (SG1, SG2 ; SG4) et deuxième sous-groupes (SG2, SG3 ; SG5) comportant des moyens (22A, 22B, 22C ; 122AB, 122C) d'obturation sélective au moins substantielle de sa sortie de perméat, caractérisée en ce que la sortie de non-perméat d'un premier sous-groupe (SG1, SG2 ; SG4) est reliée à l'entrée de mélange gazeux d'un deuxième sous-groupe (SG2, SG3 ; SG5).

2. Installation selon la revendication 1, caractérisée en ce que les liaisons (20A, 20B ; 120A, 120B, 121) de la sortie de non-perméat d'un sous-groupe (SG1, SG2 ; SG4)à l'entrée d'un sous-groupe suivant (SG2, SG3 ; SG5) sont dépourvues de tout moyen d'obturation.

3. Installation selon la revendication 1 ou 2, caractérisée en ce que chacun des sous-groupes (SG1, SG2, SG3) présente une même surface de perméation.

4. Installation selon la revendication 3, caractérisée en ce que chacun des sous-groupes à l'exception d'un sous-groupe, notamment du sous-groupe amont (SG1), comporte des moyens d'obturation (22B, 22C) au moins substantielle du côté perméat.

5. Installation selon la revendication 1 ou 2, caractérisée en ce que la surface de perméation est différente d'un sous-groupe (SG4, SG5) à l'autre.

6. Installation selon la revendication 5, caractérisée en ce que les sous-groupes (SG4, SG5) sont reliés entre eux de façon telle que chaque sous-groupe (SG4) présente une surface de perméation plus importante ou égale à celle du sous-groupe suivant (SG5).

7. Installation selon la revendication 5 ou 6, caractérisée en ce que chacun des sous-groupes (SG4, SG5) comporte des moyens d'obturation (122AB, 122C) au moins substantielle de sa sortie de perméat.

8. Installation selon l'une des revendications précédentes, caractérisée en ce que les moyens d'obturation (22A, 22B, 22C ; 122AB, 122C) sont des vannes tout-ou-rien.

9. Installation selon l'une des revendications précédentes, caractérisée en ce qu'elle comporte des moyens de réglage de la température (10) du fluide de charge et/ou des moyens de réglage de la pression (8) du fluide de charge et/ou de moyens de réglage de la pression (28) du perméat.

10. Procédé de traitement d'un mélange gazeux de charge utilisant une installation selon l'une quelconque des revendications 1 à 9, caractérisé en ce qu'on ferme au moins substantiellement lesdits moyens d'obturation (22A, 22B, 22C ; 122AB, 122C) d'au moins un sous-groupe (SG1, SG2, SG3; SG4, SG5) lorsque le débit de charge réel de l'installation devient inférieur d'une quantité prédéterminée au débit de charge nominal.

11. Procédé selon la revendication 10, caractérisé en ce que lorsqu'on ferme des moyens d'obturation (22A, 22B, 22C ; 122AB, 122C), le rapport de la surface de perméation effective à la surface de perméation totale de l'installation est sensiblement égal au rapport du débit de charge réel au débit de charge nominal.

12. Procédé selon la revendication 10, caractérisé en ce que lorsqu'une égalisation du rapport des surfaces de perméation au rapport des débits par ladite fermeture n'est pas possible, on actionne des moyens d'ouverture de telle façon que le rapport des surfaces de perméation soit le plus proche possible du rapport des surfaces de perméation lors de ladite égalisation, et supérieur à cette valeur.

13. Procédé selon la revendication 11 ou 12, utilisant une installation selon la revendication 9, caractérisé en ce que lorsque le rapport de la surface de perméation effective à la surface de perméation totale n'est pas égal au rapport du débit de charge réel au débit de charge nominal, on règle la température du fluide de charge et/ou la pression du fluide de charge et/ou la pression du perméat de façon telle que le perméat présente un débit et une pureté prédéterminés.

14. Procédé selon l'une des revendications 10 à 13, caractérisé en ce que la totalité du courant de non-perméat d'un sous-groupe (SG1, SG2 ; SG4) est le courant d'alimentation du sous-groupe suivant (SG2, SG3 ; SG5).
